(19) Europäisches Patentamt
European Patent Office
Office européen des brevets

(11) **EP 2 044 844 A1**

(12) **EUROPÄISCHE PATENTANMELDUNG**

(43) Veröffentlichungstag:
**08.04.2009 Patentblatt 2009/15**

(51) Int Cl.:
**A23B 7/152** (2006.01)     **A23L 3/3445** (2006.01)

(21) Anmeldenummer: **08016501.2**

(22) Anmeldetag: **18.09.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **18.09.2007   DE 102007044677**

(71) Anmelder: **Nonnenmacher, Klaus, Prof.Dipl.-Ing.
72070 Tübingen (DE)**

(72) Erfinder: **Nonnenmacher, Klaus, Prof.Dipl.-Ing.
72070 Tübingen (DE)**

(74) Vertreter: **Wüstefeld, Regine Marie
Patentanwältin
Hintere Grabenstrasse 26
72070 Tübingen (DE)**

(54) **Verfahren und Vorrichtung zur Erhöhung der Lagerungsbeständigkeit von Obst und Gemüse**

(57)     Die Erfindung betrifft ein Verfahren zur Erhöhung der Lagerungsbeständigkeit von Obst und Gemüse in einer gegenüber der Außenwelt im wesentlichen abgeschlossenen Kammer, bei dem Luft das dort gelagerte Obst und/oder Gemüse durchströmt, welcher ein Ozongas-Gemisch aus einem Ozongenerator (17) zugeführt wird, wobei das Ozon in dem Ozongenerator (17) durch Zuführen von Sauerstoff aus der Atmosphäre erzeugt, der Sauerstoff als Trägergas verwendet und der in der Atmosphäre zusätzlich vorhandene Stickstoff vor dem Einleiten der Luft in den Ozongenerator (17) abgetrennt wird, und wobei der Anteil des in der Kammer durch Reifeprozesse des Obstes und/oder Gemüses verbrauchten Sauerstoffs gemessen und über den zuvor der Luft entzogenen, und gegebenenfalls über eine Zudosierung ergänzten gasförmigen Stickstoff ausgeglichen wird.

Die Erfindung betrifft auch eine Vorrichtung für die Lagerung von Obst und/oder Gemüse in der Kammer, deren kontrollierte Atmosphäre über eine Meß-, Steuer- und Regeleinheit gewährleistet ist.

Fig. 1

EP 2 044 844 A1

**Beschreibung**

Die Erfindung betrifft ein Verfahren zur Erhöhung der Lagerungsbeständigkeit von Obst und Gemüse sowie eine Vorrichtung zur Durchführung des Verfahrens.

Es besteht in zunehmendem Maße der Bedarf, Obst und Gemüse längere Zeit nach der Ernte zu lagern. Teilweise wird es in unreifem Zustand geerntet, um erst bei seiner Lagerung den verbrauchsfertigen Reifezustand zu erreichen. Früchte, bei denen eine solche Nachreifung möglich ist, werden klimakterische, d.h. nachreifende Früchte genannt. Dabei wird Stärke zu Zucker abgebaut und Glucose in die süßere Fructose umgewandelt. Ob eine Frucht als nachreifende Frucht bezeichnet werden kann, hängt im wesentlichen von ihrem Atmungsverhalten ab. Unter Atmungsverhalten wird dabei die Abgabe von Kohlendioxid ($CO_2$) und die Aufnahme von Sauerstoff ($O_2$) verstanden. Früchte, deren $CO_2$-Abgabe nach Beginn ihres Reifungsprozesses ansteigt, reifen auch nach ihrer Ernte weiter. Klimakterische Früchte sind insbesondere Kiwi, Bananen, Äpfel und Birnen, Pfirsiche, Nektarinen und Aprikosen sowie auch Zwetschgen. Bei Gemüse sind insbesondere Gurken und Zucchini, Broccoli und die verschiedenen Kohlsorten, u.a. Blumenkohl, zu nennen. Verantwortlich für den Reifeprozeß ist nach heutiger Kenntnis das von den Früchten oder dem Gemüse ausgeschiedene autokatalytisch wirkende Phytohormon Ethylen ($C_2H_4$), das deshalb auch als Reifegas bezeichnet wird.

Um das Obst oder Gemüse länger lagern zu können, ist es daher erforderlich, das von diesem in ganz natürlicher Weise abgesonderte Ethylen in irgendeiner Form abzufangen oder die Ethylenbildung selbst zumindest teilweise zu verhindern. Für die Lagerung von bis zu einem halben Jahr ist im Stand der Technik das sogenannte CA-Verfahren bekannt, wobei die Abkürzung CA für "controlled atmosphere" steht. Dabei wird ein Kühlraum mit Stickstoff ständig gespült. Nachteil bei diesem bekannten Verfahren ist, daß für große Lagerdepots die Anschaffungs- und Energiekosten sehr hoch sind. Die Gasspülung erfordert eine hohe Luftwechselrate im Kühlraum. Dabei treten in dem Klimakterium, d.h. bei der Nachreifung, trotz der Stickstoffgas-Spülung so hohe Ethylen-Konzentrationen auf, daß der Reifeprozeß von dem gelagerten Obst oder Gemüse deutlich beschleunigt wird. Erfahrungswerte zeigen, daß ein Anteil von 0,02 % Ethylen die vier- bis zehnfache Beschleunigung des Reifeprozesses bewirkt, je nachdem, welches Obst oder Gemüse gelagert ist. Bei Früchten, die auf dem Lager reifen, läßt sich zudem ein klimakterischer Atmungsanstieg, der unter dem Begriff "climacteric rise" bekannt ist, feststellen und mit einem Ethylenanalysator messen. Eine entsprechend des Ethylenanstiegs erhöhte Zufuhr von Stickstoffgas erfolgt dann aber in der Regel nicht, weil dies wirtschaftlich oftmals nicht mehr vertretbar ist.

Neuere Entwicklungen gehen dahin, die Früchte oder das Gemüse zu beschichten. So ist bekannt, ein synthetisches Polymer pflanzlichen Ursprungs, das im wesentlichen aus Estern der Saccharose mit Fettsäuren besteht, zur Erhöhung der Lagerfähigkeit von Obst und Gemüse einzusetzen. Das unter der Bezeichnung "Semperfresh" als Nacherntemittel entwickelte, im Handel erhältliche Produkt soll für einen modifizierten Gasaustausch der Früchte oder dem Gemüse und dadurch zu einer verlangsamten Reifung der Früchte oder Gemüse führen. Zu diesem Zweck bilden die Saccharoseester einen unsichtbaren, geschmacksneutralen und ungiftigen Film über den behandelten Früchten. Die Durchlässigkeit für Sauerstoff soll bis 85-95% gesenkt werden und die Durchlässigkeit für $CO_2$ um etwa 10-15% abnehmen, weil der Film eine veränderte Atmosphäre im Inneren der Frucht bewirkt. Über den reduzierten Sauerstoffgehalt wird die Produktion des Reifegases Ethylen reduziert. Allerdings ist von diesem Mittel als nachteilig bekannt, daß es die Lagerfähigkeit bestimmter Früchte, wie Bananen, nicht für eine ausreichend lange Zeitspanne erhöht.

In der US-B-6,165,529 der Planet Polymer Technologies, Inc., wird zur Vermeidung dieses Nachteils eine Beschichtung vorgeschlagen, die eine ca. 1-20 gew.-%ige wäßrige Lösung eines vollständig hydrolysierten, in kaltem Wasser unlöslichen Polyvinylalkohols, ca. 0,1 - ca. 10 Gew.-% von in kaltem Wasser löslicher stärke mit geringem Molekulargewicht und ca. 0,03 - ca. 5 Gew.-% einer oberflächenaktiven Substanz umfaßt.

Ausgehend von diesem Stand der Technik lag der vorliegenden Erfindung daher die Aufgabe zugrunde, ein Verfahren zur Langzeitlagerung von Obst und Gemüse durch Erhöhung von dessen Lagerungsbeständigkeit bereitzustellen, das die Langzeitlagerung mit wirtschaftlich vertretbaren Kosten ermöglicht, umweltfreundlich ist und das Ablagern von Chemikalien unterschiedlichster Art auf der Oberfläche von Frucht und/oder Gemüse vermeidet.

Gelöst wird diese Aufgabe durch ein Verfahren zur Erhöhung der Lagerungsbeständigkeit von Obst und Gemüse in einer gegenüber der Außenwelt im wesentlichen abgeschlossenen Kammer, bei dem Luft das dort gelagerte Obst und/oder Gemüse durchströmt, welcher ein Ozongas-Gemisch aus einem Ozongenerator zugeführt wird, wobei das Ozon in dem Ozongenerator durch Zuführen von Sauerstoff aus der Atmosphäre erzeugt, der Sauerstoff als Trägergas verwendet und der in der Atmosphäre zusätzlich vorhandene Stickstoff vor dem Einleiten der Luft in den Ozongenerator abgetrennt wird, und wobei der Anteil des in der Kammer durch Reifeprozesse des Obstes und/oder Gemüses verbrauchten Sauerstoffs gemessen und über den zuvor der Luft entzogenen, und gegebenenfalls über eine Zudosierung ergänzten gasförmigen Stickstoff ausgeglichen wird.

Bei dem erfindungsgemäßen Verfahren wird die Lagerungsbeständigkeit von Obst und/oder Gemüse dadurch erhöht, daß das Reifegas $C_2H_4$ und gegebenenfalls eines oder mehrere weitere Reifegase direkt an dem Obst und/oder Gemüse abgefangen werden. So wird erreicht, daß gleichzeitig mit dem Abfangen des Reifegases oder der Reifegase auch das Klimakterium abgefangen werden kann. Es findet im günstigsten Fall gar nicht mehr statt.

Erreicht wird dies, indem das Ozon bzw, das Ozongas-Gemisch zu dem gelagerten Obst und/oder Gemüse geleitet wird, es durchströmt, und das der Frucht und/oder dem Gemüse entweichende Reifegas direkt dort abgefangen wird. Das Ozon bzw. das Ozongas-Gemisch reagiert mit dem Reifegas unter dessen Zersetzung nach folgender Reaktions-gleichung:

$$C_2H_4 + 3\,O_3 \rightarrow 2\,CO_2 + 2H_2O \qquad\qquad (I)$$

Vorzugsweise wird das Obst und/oder Gemüse in einer Kammer gelagert, die als klimatisierte Kammer in Form eines Kühlraums ausgebildet wird. Und das als Reaktionsprodukt des Ozons mit dem Reifegas gebildete $CO_2$ wird aus der Kammer abgefühlt.

Das Ozon wird in Form eines Gasgemisches mit Sauerstoff zu dem Obst und/oder Gemüse in der Klammer geleitet, um das Reifegas $C_2H_4$ unter Bildung der unschädlichen Reaktionsprodukte Kohlendioxid und Wasser zu zersetzen. Das Ozon wird dabei durch Steuer- und Regelmechanismen gerade so dosiert, daß es vollständig verbraucht wird. Es besteht daher nicht das Problem, nicht umgesetztes Ozon wieder entfernen zu müssen.

Bei der Lagerung von klimakterischem Obst und/oder Gemüse erfolgt zusätzlich ein weiterer oxidativer Abbau, indem Zucker ($C_6H_{12}O_6$) mit dem Sauerstoff in der in der Kammer zu Kohlendioxid und Wasser nach folgendem Reak-tionsschema reagiert:

$$(C_6H_{12}O_6) + 6O_2 \rightarrow 6CO_2 + 6H_2O \qquad\qquad (II)$$

Durch diese als Zuckeratmung bekannte Reaktion wird der Kammer zusätzlich Sauerstoff entzogen.

Im Rahmen des erfindungsgemäßen Verfahrens ist es vorgesehen, dem Obst und/oder Gemüse in der Kammer, in der es gelagert ist, gegebenenfalls zusätzlich Stickstoff ($N_2$) gasförmig zuzuführen. Dieser Stickstoff dient dazu, die durch die genannte Zuckeratmung verbrauchte Sauerstoffmenge bei der Lagerung der Früchte und/oder des Gemüses zu ersetzen, damit kein Vakuum in der Kammer bzw. dem Kühlraum entsteht. Auch der Stickstoff wird durch Steuer- und Regelmechanismen gerade so dosiert, daß in dem Lagerraum kein Unterdruck entsteht.

Der für die Stickstoffzufnhr erforderliche Stickstoff wird in einem Stickstoffgenerator hergestellt, der mit Atmosphärenluft gespeist wird, und in dem das in der Atmosphärenluft enthaltene Stickstoffgas über ein Molekularsieb herausgefiltert und in den Lagerraum geleitet wird. Der dabei übrigbleibende Sauerstoff aus der Atmosphäre wird verworfen.

Es ist allerdings ein wesentlicher Gesichtspunkt des erfindungsgemäßen Verfahrens, mit kleinsten Mengen von Ozon den Ethylengehalt kleinzuhalten, möglichst, ohne den $N_2$-Gehalt durch Zudosieren zu erhöhen. Auf diese Weise arbeitet das erfindungsgemäße Verfahren sehr effizient und wirtschaftlich. Es setzt sich dadurch deutlich von den im Stand der Technik bekannten Verfahren ab, die darauf abzielen, das insbesondere während des Durchlaufens des Klimakteriums des Obstes bzw. Gemüses abgesonderte Ethylen abzufangen und auszuspülen. Es hat sich gezeigt, daß der Wirkungsgrad bei einer Spülung mit Stickstoff sehr gering ist, verglichen mit den verursachten hohen Kosten. Es ist eine enorme Kompressorleistung erforderlich, um die für das Ausspülen benötigte $N_2$-Menge zu erzeugen. Außerdem geht im Stand der Technik mit diesem Ausspülen auch eine Erhöhung der Ozonmenge zum Abfangen des Ethylens einher, was erfindungsgemäß vermieden werden kann.

Der gegebenenfalls, zumindest in der Anfangsphase, über eine Zudosierung ergänzte Stickstoff wird vorzugsweise in einem Stickstoffgenerator aus Frischluft hergestellt, der dabei anfallende Sauerstoff verworfen und außerdem $CO_2$ abgetrennt.

Der $CO_2$-Gehalt in der Kammer wird kontrolliert und bei $\leq 4$ Vol-%, vorzugsweise $\leq 3$ Vol-% und besonders bevorzugt bei $\leq 2$ Vol-% gehalten.

Erreicht werden die Vorzüge der Erfindung vorzugsweise dadurch, daß das erfindungsgemäße Verfahren in einer kontrollierten Atmosphäre durchgeführt wird, indem eine Meß-, Steuer- und Regeleinheit die Gaskomponenten Ethylen, Sauerstoff, Stickstoff, $CO_2$, und Wasser sowie die Gasparameter Temperatur, Druck und relative Feuchte kontrolliert und reguliert.

Die Erfindung betrifft auch eine Vorrichtung zur Durchführung des zuvor beschriebenen erfindungsgemäßen Verfahrens, welche für die Lagerung von Obst und/oder Gemüse in einer kontrollierten Atmosphäre in einer als solcher gegenüber der Außenwelt im wesentlichen abgeschlossenen Kammer geeignet ist. Die Kammer ist dabei mit einem Ozongenerator von außen verbunden, der selbst wiederum eine Zuführung von Sauerstoff als Trägergas aufweist. Außerdem weist die Vorrichtung einer Zuführung von Stickstoff und Umgebungsluft zu der Kammer, Ableitungen für $CO_2$ und Wasser aus der Kammer, einem Verbindungsknoten, der die Zu- und Ableitungen zu und von der Kammer reguliert, und eine Meß-, Steuer- und Regeleinheit auf, die einen Vakuumsensor, einen Temperatursensor, einen Drucksensor und einen Feuchtigkeitssensor umfaßt und zumindest mit einem Ozonanalysator, einem Ethylenanalysator, einem Stickstoffanalysator, einem Kohlendioxidanalysator und einem Sauerstoffanalysator zusammenwirkt,

Besonders hervorzuheben ist der Knoten, welcher die einzelnen Komponenten untereinander und mit der Kammer bzw. dem Kühlraum verbindet und der unter anderem dazu dient, Sauerstoff für den Sauerstoff- bzw. Ozongenerator bereitzustellen und Kohlendioxid abzuscheiden.

Der Ozongenerator, der Sauerstoffgenerator und der Stickstoffgenerator sind durch eine Meß-, Steuer- und Regeleinheit kontrolliert, die noch weitere Meß-, Kontroll- und Steuerungsaufgaben hat, wie sie weiter unten in der Beschreibung eines Ausführungsbeispiels näher erläutert sind. Durch die Steuer- und Regelmechanismen können alle eingesetzten Komponenten wirtschaftlich sinnvoll verwertet werden.

Vorzugsweise ist die Kammer zusätzlich mit einem Stickstoffgenerator (21) verbunden und der Ozongenerator noch mit einem Sauerstoffgenerator.

Im folgenden soll die Erfindung anhand der beigefügten Zeichnung näher erläutert werden.

Dabei zeigt

die einzige Fig.: ein Blockschema der einzelnen, für die Durchführung des Verfahrens erforderlichen Vorrichtungskomponenten.

In dem Blockschema ist mit 1 ein Kühlraum bezeichnet, der über einen Ventilator 3, einen Kühler 5 und einen Befeuchter 7 klimatisiert wird. In dem Kühlraum befindet sich eine Lagerbühne 9, in der beliebiges Obst und/oder Gemüse gelagert werden kann. Im Ausführungsbeispiel weist die Lagerbühne 9 Kiwis auf. Über ein 2/2-Wege-Ventil 11 wird der Kühlraum 1 hermetisch gegenüber der Außenwelt abgeschlossen. Die klimatisierte Luft durchströmt gleichmäßig die Lagerbühne 9 und umströmt die darauf lagernden Früchte. Damit kein Kurzschluß entsteht, befindet sich eine Membran 13 zwischen der Lagerbühne 9 und der Kühlraumdecke 15. Das belegte Volumen der Lagerbühne 9 beträgt etwa 1/3 des Gesamtvolumens. Die Dichte der Früchte beträgt:

$$M/V = 3500\,t\,/\,7000\,m^3 = 5{,}5\ t/m^3\ \text{Kühlraum},$$

wobei M die Gesamtmasse der Früchte und V das Volumen der Lagerbühne 9 bedeutet.

Die klimatisierte Luftmenge beträgt in diesem Beispiel etwa 20.000 $m^3$/h, was einer Luftwechselrate von 3 f/h entspricht,

Mittels des Ozongenerators 17 wird Ozon hergestellt und der klimatisierten Luft des Kühlraums 1, welche die Lagerbühne 1 durchströmt, zudosiert. Dadurch gelangt es gleichmäßig in alle Hohlräume der Lagerbühne 1, wo die Reaktion mit Ethylen stattfindet. Die Reaktionsprodukte Kohlendioxid und Wasser werden in dem Fachmann an sich bekannter Weise abgeftührt.

In dem Ozongenerator 17 wird Sauerstoff als Trägergas verwendet, das seinerseits in dem Sauerstoffgenerator 19 hergestellt wird. Dazu verwendet der Sauerstoffgenerator den in dem Kühlraum 1 vorhandenen Sauerstoff. Daher muß über "Luft/EIN" wenig oder gar keine Luft aus der umgebenden Atmosphäre zugeführt werden, wenn das System sich im Gleichgewicht befindet. Der Stickstoffanteil in der Luft wird mittels eines geeigneten Molekularsiebs herausgefiltert. Er wird verwertet, indem er dem Kühlraum 1 über Leitung 19a zugeführt wird, und dient mit dazu, den durch die Zuckeratmung erfolgten Sauerstoffverlust auszugleichen.

Darauf wird weiter unten noch näher eingegangen. Der sich bei dem Zudosieren in den Kühlraum 1 in dem Ozon befindende Sauerstoff wird bei der oben mit (I) bezeichneten Zersetzungsreaktion von Ethylen vollständig umgesetzt und findet sich dann in den Reaktionsprodukten Kohlendioxid und Wasser wieder.

Das grundsätzliche Problem einer solchen Lagereinrichtung, wie dem dargestellten Kühlraum 1, besteht darin, daß eine wesentlich größere Sauerstoffmenge (siehe weiter unten, Beispiel B) durch die Atmung der Früchte verbraucht wird, mit der Folge, daß sich der Sauerstoffgehalt in der klimatisierten Luft rasch erniedrigt, bis sich die Atmungsaktivität der Früchte auf ein Minimum reduziert. Unter dieser Atmungsaktivität wird die in Reaktionsformel (II) dargestellte sogenannte Zuckeratmung verstanden.

Die so verbrauchte Sauerstoffmenge führt zu einem Vakuum im Kühlraum. Erfindungsgemäß wird dem Kühlraum 1 zum Ausgleich Stickstoff zugeführt, der den durch die Zuckeratmung erfolgten Sauerstoffverlust gerade eben ausgleichen soll. D.h. es wird gerade so viel Stickstoff zudosiert, daß kein Unterdruck entsteht.

Stickstoff wird über den Stickstoffgenerator 21 aus Frischluft, d.h. Atmosphärenluft hergestellt, die über ein 3/2-Wege-Ventil 23 in den Stickstoffgenerator 21 strömt. Als Abfallprodukt fällt im Stickstoffgenerator 21 Sauerstoff an, der verworfen wird. Es ist nicht günstig, diesen Sauerstoff weiterzuverwenden, um z.B. damit den Ozongenerator zu speisen, denn sobald sich das System in der Balance, im Gleichgewicht befindet, ist kein Stickstoff mehr erforderlich. Der Stickstoffgenerator kann dann abgeschaltet werden, während der Bedarf an Sauerstoff erhalten bleibt.

Neben dem Sauerstoff wird außerdem Kohlendioxid abgetrennt. Dadurch kann gewährleistet werden, daß der Kohlendioxidanteil auch bei einer deutlichen Atmungsaktivität der Früchte oder des Gemüses bei bzw. unter 2% gehalten werden kann. In den Stickstoffgenerator integriert ist ein Wasserkondensator, was in der Fig. mit der Bezeichnung ($H_2O$) angedeutet ist.

Dem Knoten 25 kommt erfindungsgemäß eine wesentliche Bedeutung zu. Über den Knoten 25 steht dem Sauerstoffgenerator 19 eine ausreichende Sauerstoffmenge zur Verfügung, auch wenn die Sauerstoffkonzentration in der Kühlkammer 1 z.B. nur noch 2 % beträgt. Über den Knoten 25 kann außerdem Kohlendioxid die Vorrichtung verlassen, welcher zumindest 90 % der in dem Stickstoffgenerator 21 abgetrennten Gasmenge ausmacht. Das Verhältnis der Gasmenge von Sauerstoffgenerator 19 zu Stickstoffgenerator 21 beträgt etwa 1:10.

Der Knoten 25 erfüllt daher im wesentlichen zwei Funktionen. Er dient zum einen dazu, genügend Sauerstoff für den Betrieb des Ozongenerators 17 bereitzustellen, auch dann, wenn der Sauerstoffgehalt in dem Kühlraum 1 bei 2% oder darunter liegt. Zum anderen dient er dazu, ca. 90% des Kohlendioxids abzuscheiden.

Vorteilhaft ist außerdem, daß mit dem Stickstoffgenerator 21 auch der Kohlendioxidgehalt kontrolliert werden kann, sofern neue Frischluft benötigt wird, da $CO_2$ bei der Separation noch mehr bevorzugt wird als Sauerstoff selbst.

Die vorteilhafte und wirtschaftlich kostengünstige Ausgestaltung des erfindungsgemäßen Verfahrens wird gestützt durch eine Meß-, Steuer- und Regeleinheit, die in der einzigen Fig. schematisch angedeutet und insgesamt mit 26 bezeichnet ist, und die im wesentlichen mit einem Vakuumsensor 27, einem Temperatursensor 29, einem Sensor 31 für die Messung des Feuchtigkeitsgehalts der Luft in dem Kühlraum, einem Ozonanalysator 33, Ethylenanalysator 35, Stickstoffanalysator 37, Kohlendioxidanalysator 39 sowie einem Sauerstoffanalysator 41 zusammenwirkt.

Die kontrollierte Atmosphäre in dem Kühlraum 1 entsteht dadurch, daß alle Gaskomponenten $C_2H_4$, $H_2O$, $CO_2$, $O_2$, $N_2$ und zusätzlich die Gasparameter Temperatur (T), Druck (p) und die relative Feuchte in % (F) kontrolliert und je nach Bedarf zu- oder abgeführt, erhöht oder erniedrigt werden können.

Die physikalisch meßbaren Gaskomponenten und parameter werden in den Meßgeräten in an sich bekannter Weise in elektrische Signale umgewandelt und diese werden wiederum an die programmierbare Steuerung 26 geliefert.

Bei Wahl der Frucht- oder Gemüseart, vorliegend z.B. Kiwi, ordnet die Meß-, Steuer- und Regeleinheit 26 die dort gespeicherten Sollwerte alle zu und steuert bzw. regelt die einzelnen Bestandteile des Regelkreises, das Ventil 11, den Ventilator 3, den Kühler 5, den Befeuchter 7, den Sauerstoffgenerator 19, den Stickstaffgenerator 21, den Ozongenerator 17, das 3/2-Wege-Ventil 23 und den zusammen mit dem Stickstoffgenerator 21 angeordneten Wasserkondensator.

Auf diese Weise kann ein Langzeitbetrieb zuverlässig gewährleistet werden. Das Klimakterium der Früchte bzw. des Gemüses wird durch die Meßgeräte erfaßt, so daß die Meß-, Steuer- und Regeleinheit 26 entsprechend gegensteuern kann.

Der besondere Vorteil besteht darin, daß der sogenannte "climacteric rise" gar nicht erst auftreten kann, so daß die erhöhte Reifeentwicklung nicht stattfindet.

Als zusätzliche Bestandteile der Vorrichtung zur Durchführung des erfindungsgemäßen Verfahrens sind noch die mit der Bezugsziffer 43 versehene Entlüftung des Systems und ein Bypass-Ventil 45 zu nennen. Dieses Bypass-Ventil ist nur geöffnet, wenn der $O_2$ / $CO_2$ - Gehalt in dem Kühlraum zu niedrig wären. Der Stickstoffgenerator 21 ist dann abgeschaltet.

Die wirtschaftliche Bedeutung des erfindungsgemäßen Verfahrens soll anhand der nachfolgenden Berechnungen einer Langzeitlagerung in herkömmlicher Weise (Beispiel A) und der erfindungsgemäßen Langzeitlagerung (Beispiel B) am Beispiel von Kiwis näher dargestellt werden:

**Beispiel A (herkömmliche Lagerung):**

| | |
|---|---|
| Volumen Kühlraum : | 7000 m$^3$ |
| Stickstoffspülung : | 1000 m$^3$/h |
| Luftwechselrate nach (+1) : | 1/6 ....1/7 fach |
| Stromkosten Stickstoffherstellung : | 250 KW x 0,2 €/kWh |
| (Zeitperiode 6 Monate) | x 5.000 h **= 250.000,00 € (a)** |
| Investitionskosten : | **= 600.000,00 € (b)** |
| Kühlenergie für Stickstoffspülung : | 134.000 kWh x 0,2 €/kWh x 0,5 |
| (Zeitperiode 6 Monate) | **= 13.800,00 € (c)** |
| Ethylenproduktion, Kiwi : | 1,0 µl/kg.h x 3.500 to = 3.5l |
| im Klimakterium, geschätzt : | 35 .... 350 l/h |
| Fruchtmenge : | 3.500 t |
| Belegung : | 7000/3= 2,330 m$^3$ |
| Restvolumen : | 7000 - 2330 = 4.670 m$^3$ |
| **Laufende Kosten** | **Σ(a) + (b) + (c) =** <u>863.800,00 €</u> |

**Beispiel B Lagerung nach erfindungsgemäßem Verfahren:**

| | |
|---|---|
| Volumen Kühlraum : | 7000 m$^3$ (netto 4670 m$^3$) |
| Stickstoffspülung : | 21 m$^3$/h |
| Luftwechselrate nach : | netto 0,0045 f/h |
| Stromkosten Stickstoffherstellung : | 0,25 kWh/m$^3$ x 21 m$^3$/h x 0,2 €/kWh |
| (Zeitperiode 6 Monate) | x 5.000 h = **5.250,00 € (a)** |
| Investitionskosten für die | |
| - N$_2$- und O$_3$- Erzeugung : | = **30.000,00 €** |
| - Kühlenergie N$_2$, 0$_3$ : | = **276,00 € (b)** |
| Ethylenproduktion, Kiwi : | 3,5 l/h |
| im Klimakterium, geschätzt : | 35 .... 350 l/h |
| Fruchtmenge : | 3.500 t |
| Belegung : | 2.330 m$^3$ |
| Restvolumen : | 4.670 m$^3$ |
| Sauerstoffverbrauch, Atmung : | 21.000 l/h |
| Sauerstoffverbrauch, Reaktion : | 11.9 l/h |
| Sauerstoffmenge, am Beginn : | 934 m$^3$ O$_2$ (20 %) |
| Sauerstoffmenge, Betrieb : | > 93,4 m$^3$ O$_2$ (= 2 %) |
| CO$_2$-Produktion, Reaktion : | 13,2 g/h = 7.2 l/h = 0,3 mol/h |
| Klimatisierte Luftmenge : | 20.000 m$^3$/h |
| Luflwechselrate : | ca. 3 f/h |
| Stromkosten, O$_3$ Herstellung : | 14,4 g/h x 10 Wh/g = 0,2 E/kWh x 5000 = **144.00 € (c)** |
| **Laufende Kosten ohne Vorinvestititon** | Σ(a) + (b) + (c) = **5.670,00 €** |

Die Grundlagen für die Berechnungen sowie die Zahlen sind, soweit erforderlich und nicht aus eigenem Datenbestand verfügbar, aus dem Containerhandbuch entnommen.

Im folgenden wird noch in Tabelle 1 dargestellt, wie sich die Kosten des herkömmlichen Verfahrens von denen des erfindungsgemäßen Verfahrens mit und ohne Meß- und Regeltechnik unterscheiden. Daraus folgt, daß das erfindungsgemäße Verfahren auch dann, wenn es ohne die spezielle Sensortechnik eingesetzt wird, bereits deutliche Vorteile gegenüber dem Stand der Technik zeigt.

Dabei sind die Energiekosten für die Lagerkühlung, ohne Spülung, bei beiden Verfahren gleich, ebenso die Kosten für die Meß- und Regeltechnik.

Im Hinblick auf die Kostenersparnis nach dem erfindungsgemäßen Verfahren führen insbesondere die laufenden Stromkosten zu einer deutlichen Reduktion der Gesamtkosten. Auch die Investitionskosten sind gegenüber dem bekannten Verfahren deutlich reduziert.

**Tabelle 1**

| Kühlraum Volumen 7000m$^3$ | CA-Verfahren | Erfind.- gemäßes Verfahren ohne Steuerung | Erfind.- gemäßes Verfahren mit Steuerung |
|---|---|---|---|
| Investit.-betrag (€) | 600.000,-- | 30.000,-- | 130.000,-- |
| Stromkosten 6 Mon. | 263.800,-- | 5.670,-- | 6.000,-- |
| Stromkosten, Kühlg., 6 Mon. | 12.000,-- | 12.000,-- | 12.000,- |
| Fruchtmenge in t | 3.500 | 3.500 | 3.500 |
| Spez. Energiekosten €/t, jew. mit Kühlung | 75,4 <br> 78,8 | 1,62 <br> 5,10 | 1,72 <br> 5,14 |

Versuche haben gezeigt, daß das erfindungsgemäße Verfahren die Lagerungsbeständigkeit von Obst bzw. Gemüse längerfristig und kostengünstig erhöht.

Der Ozongenerator 17 liefert ein hochwirksames Ozongas, das in die Kammer bzw. den Kühlraum 1 geführt wird und ermöglicht zusätzlich eine perfekte Hygiene. Mikroorganismen, wie Schimmelpilze, Algen, Hefen, Bakterien, Dauersporen und dgl. werden in ihrem Stoffwechsel so gestört, daß eine Vergrößerung, Vermehrung oder Atmung ihrer Zellen unmöglich ist. Ein durch mikrobiologisches Wachstum bedingter Verderb kann somit zusätzlich wirksam und sicher verhindert werden.

**Patentansprüche**

1. Verfahren zur Erhöhung der Lagerungsbeständigkeit von Obst und Gemüse in einer gegenüber der Außenwelt im wesentlichen abgeschlossenen Kammer, bei dem Luft das dort gelagerte Obst und/oder Gemüse durchströmt, welcher ein Ozongas-Gemisch aus einem Ozongenerator (17) zugeführt wird, wobei das Ozon in dem Ozongenerator (17) durch Zuführen von Sauerstoff aus der Atmosphäre erzeugt, der Sauerstoff als Trägergas verwendet und der in der Atmosphäre zusätzlich vorhandene Stickstoff vor dem Einleiten der Luft in den Ozongenerator (17) abgetrennt wird, und wobei der Anteil des in der Kammer durch Reifeprozesse des Obstes und/oder Gemüses verbrauchten Sauerstoffs gemessen und über den zuvor der Luft entzogenen, und gegebenenfalls über eine Zudosierung ergänzten gasförmigen Stickstoff ausgeglichen wird.

2. Verfahren nach Anspruch 1, **dadurch gekennzeichnet, daß** die Kammer als klimatisierte Kammer in Form eines Kühlraums (1) ausgebildet wird.

3. Verfahren nach Anspruch 1 oder 2, **dadurch gekennzeichnet, daß** als Reaktionsprodukt gebildetes $CO_2$ aus der Kammer abgeführt wird.

4. Verfahren nach einem der Ansprüche 1 bis 3, **dadurch gekennzeichnet, daß** der über eine Zudosierung ergänzte Stickstoff in einem Stickstoffgenerator (21) aus Frischluft hergestellt, der dabei anfallende Sauerstoff verworfen und außerdem $CO_2$ abgetrennt wird.

5. Verfahren nach einem der Ansprüche 1 bis 4, **dadurch gekennzeichnet, daß** der $CO_2$-Gehalt in der Kammer bei $\leq 4$ Vol-%, vorzugsweise $\leq 3$ Vol-% und besonders bevorzugt bei $\leq 2$ Vol-% gehalten wird.

6. Verfahren nach einem der Ansprüche 1 bis 5, **dadurch gekennzeichnet, daß** es in einer kontrollierten Atmosphäre durchgeführt wird, indem eine Meß-, Steuer- und Regeleinheit die Gaskomponenten Ethylen, Sauerstoff, Stickstoff, $CO_2$, und Wasser sowie die Gasparameter Temperatur, Druck und relative Feuchte kontrolliert und reguliert.

7. Vorrichtung für die Lagerung von Obst und/oder Gemüse in einer kontrollierten Atmosphäre in einer als solcher gegenüber der Außenwelt im wesentlichen abgeschlossenen Kammer, die mit einem Ozongenerator (17) von außen verbunden ist, der eine Zuführung von Sauerstoff als Trägergas aufweist, und mit einer Zuführung von Stickstoff und Umgebungsluft zu der Kammer, Ableitungen für $CO_2$ und Wasser aus der Kammer, einem Verbindungsknoten (25), der die Zu- und Ableitungen zu und von der Kammer reguliert, und einer Meß-, Steuer- und Regeleinheit, die einen Vakuumsensor (27), einen Temperatursensor (29), einen Drucksensor und einen Feuchtigkeitssensor (31) umfaßt und zumindest mit einem Ozonanalysator (33), einem Ethylenanalysator (35), einem Stickstoffanalysator (37), einem Kohlendioxidanalysator (39) und einem Sauerstoffanalysator (41) zusammenwirkt.

8. Vorrichtung nach Anspruch 6, **dadurch gekennzeichnet, daß** die Kammer zusätzlich mit einem Stickstoffgenerator (21) verbunden ist.

9. Vorrichtung nach Anspruch 6 oder 7, **dadurch gekennzeichnet, daß** der Ozongenerator (17) mit einem Sauerstoffgenerator (19) verbunden ist.

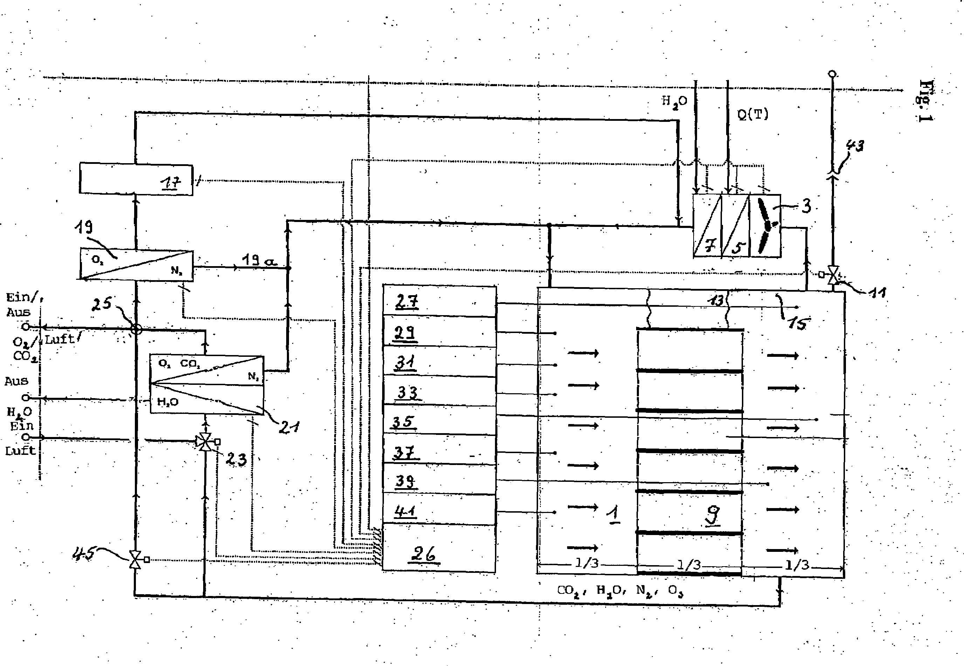

**Fig. 1**

Europäisches Patentamt
European Patent Office
Office européen des brevets

## EUROPÄISCHER RECHERCHENBERICHT

Nummer der Anmeldung

EP 08 01 6501

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 02/05665 A (CONTIFER TRUST REG [LI]; RITTER KLAUS [DE]) 24. Januar 2002 (2002-01-24) * Seite 6, Absatz 3 - Seite 10, Absatz 1; Ansprüche 1-15 * | 1-6 | INV. A23B7/152 A23L3/3445 |
| X | DATABASE WPI Week 200539 Thomson Scientific, London, GB; AN 2005-372630 XP002515883 & CN 1 579 175 A (CAI C) 16. Februar 2005 (2005-02-16) * Zusammenfassung * | 1-6 | |
| X | WO 2005/013729 A (BIOFRESH LTD [GB]; BARNES JEREMY [GB]; SINGLETON IAN [GB]; HARLEY PHIL) 17. Februar 2005 (2005-02-17) * das ganze Dokument * | 7-9 | |
| X | WO 2006/128930 A (MINANO FERNANDEZ FERNANDO [ES]) 7. Dezember 2006 (2006-12-07) * Zusammenfassung * | 7-9 | RECHERCHIERTE SACHGEBIETE (IPC) A23B A23L |
| A | JP 2002 065152 A (DAIKIN IND LTD) 5. März 2002 (2002-03-05) * Zusammenfassung * | 1-9 | |
| A | US 6 086 833 A (CONNERS ROBERT W [US] ET AL) 11. Juli 2000 (2000-07-11) * Ansprüche 1-21; Abbildungen 1-7 * | 1-9 | |

Der vorliegende Recherchenbericht wurde für alle Patentansprüche erstellt

| Recherchenort | Abschlußdatum der Recherche | Prüfer |
|---|---|---|
| München | 19. Februar 2009 | Korb, Margit |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

                                                                
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 08 01 6501

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-02-2009

| Im Recherchenbericht angeführtes Patentdokument | Datum der Veröffentlichung | Mitglied(er) der Patentfamilie | Datum der Veröffentlichung |
|---|---|---|---|
| WO 0205665 A | 24-01-2002 | KEINE | |
| CN 1579175 A | 16-02-2005 | KEINE | |
| WO 2005013729 A | 17-02-2005 | EP 1656041 A1 <br> US 2006276970 A1 | 17-05-2006 <br> 07-12-2006 |
| WO 2006128930 A | 07-12-2006 | KEINE | |
| JP 2002065152 A | 05-03-2002 | JP 3564604 B2 | 15-09-2004 |
| US 6086833 A | 11-07-2000 | CA 2244436 A1 | 08-03-1999 |

EPO FORM P0461

Für nähere Einzelheiten zu diesem Anhang : siehe Amtsblatt des Europäischen Patentamts, Nr.12/82

**EP 2 044 844 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6165529 B